(19) Europäisches Patentamt

European Patent Office

Office européen des brevets

(11) **EP 4 207 375 A1**

(12) # EUROPEAN PATENT APPLICATION
published in accordance with Art. 153(4) EPC

(43) Date of publication:
**05.07.2023 Bulletin 2023/27**

(21) Application number: **22863030.7**

(22) Date of filing: **08.08.2022**

(51) International Patent Classification (IPC):
$H01M\ 4/36$ (2006.01)    $H01M\ 4/583$ (2010.01)
$H01M\ 10/0525$ (2010.01)    $H01M\ 4/38$ (2006.01)

(52) Cooperative Patent Classification (CPC):
H01M 4/36; H01M 4/38; H01M 4/583; H01M 4/62;
H01M 10/0525; Y02E 60/10

(86) International application number:
**PCT/CN2022/110770**

(87) International publication number:
**WO 2023/029889 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.09.2021 CN 202111032387**

(71) Applicants:
• **BTR NEW MATERIAL GROUP CO., LTD.
Shenzhen, Guangdong 518106 (CN)**
• **Dingyuan New Energy Technology Co., Ltd.
Huizhou, Guangdong 516227 (CN)**

(72) Inventors:
• **HE, Peng
Shenzhen, Guangdong 518106 (CN)**
• **XIAO, Chengmao
Shenzhen, Guangdong 518106 (CN)**
• **REN, Jianguo
Shenzhen, Guangdong 518106 (CN)**
• **HE, Xueqin
Shenzhen, Guangdong 518106 (CN)**

(74) Representative: **advotec.
Patent- und Rechtsanwaltspartnerschaft
Tappe mbB
Widenmayerstraße 4
80538 München (DE)**

(54) **NEGATIVE ELECTRODE MATERIAL, PREPARATION METHOD THEREFOR AND LITHIUM-ION BATTERY**

(57)    The present application relates to a field of anode material, and an anode material, a preparation method thereof, and a lithium ion battery provided. The anode material includes an aggregate, where the aggregate includes an active material and a carbon material, and the anode material has a porosity of ≤10% and a target region ratio C of ≥15%, where, the target region ratio C is obtained by following test method: dividing a SEM section of an anode material particle into regions with an area of $A\times B$, where A and B are both ≤1 $\mu m$, counting distribution of the active material within all of the regions of single the anode material particle, setting number of regions having the active material with a spacing to each other of 10 nm to 300 nm as N1, setting a total number of regions having the active material with a spacing to each other of less than 10 nm and the regions having the active material with a spacing to each other of greater than 300 nm as N2, and defining a target region ratio X of single the anode material particle as X=N1/N2, where C is an arithmetic average of X values of any five of the anode material particles. The anode material provided is effective in inhibiting volume expansion of anode material and improving cycle performance of battery.

mixing raw materials containing an active material, a first carbon source, and a solvent and fully dispersing, and removing the solvent to obtain a first precursor ⸻ S10

performing a primary heat treatment on the first precursor at 600°C to 1200°C to obtain a second precursor ⸻ S20

performing a densification treatment on the second precursor to obtain an aggregate ⸻ S30

FIG. 1

EP 4 207 375 A1

**Description**

CROSS-REFERENCE TO RELATED APPLICATION

The present application claims the benefit of priority of Chinese Patent Application No. 2021110323875 filed with China Patent Office on September 03, 2021, entitled with "ANODE MATERIAL AND PREPARATION METHOD THEREOF, AND LITHIUM ION BATTERY", the content of which is hereby incorporated by reference in its entirety.

**TECHNICAL FIELD**

The present application relates to a technical field of anode material, and in particular, to an anode material, a preparation method thereof, and a lithium ion battery.

**BACKGROUND**

Lithium ion battery in the prior art is widely used in electric vehicles and consumer electronics due to advantages of large energy density, high output power, long cycle life, and less environmental pollution. In order to increase the energy density of battery, the research and development on silicon anode materials are advancing day after day. However, the anode material has a large volume expansion rate in the process of lithium de-intercalation and intercalation , especially the volume expansion of silicon anode material in the process of lithium de-intercalation and intercalation can be 300% or more, so that the silicon anode material may pulverize to fell off from a current collector during charging and discharging process, so that electrical contact between the active material and the current collector is lost, resulting poor electrochemical property, reduced capacity, and decreased cycle stability. Therefore, it is difficult to be applied commercially.

Therefore, how to inhibit the volume expansion of anode material and improve cycle stability of the material is an urgent problem to be solved at present.

SUMMARY

In view of this, the present application provides an anode material and preparation method thereof, and a lithium ion battery, which can effectively inhibit volume expansion of anode material and improve the cycle performance of battery. The preparation method can reduce preparation cost.

In a first aspect, an anode material is provided. The anode material includes an aggregate, where the aggregate includes an active material and a carbon material, and the anode material has a porosity of $\leq 10\%$ and a target region ratio C of $\geq 15\%$,

where, the target region ratio C is obtained by following test method:
dividing a SEM section of an anode material particle into regions with an area of $A \times B$, where A and B are both $\leq 1$ $\mu m$, counting distribution of the active material within all of the regions of single the anode material particle, setting number of regions having the active material with a spacing to each other of 10 nm to 300 nm as N1, setting a total number of regions having the active material with a spacing to each other of less than 10 nm and the regions having the active material with a spacing to each other of greater than 300 nm as N2, and defining a target region ratio X of single the anode material particle as X=N1/N2, where C is an arithmetic average of X values of any five of the anode material particles.

The anode material of this embodiment includes the aggregate, and the aggregate includes the active material, the carbon material, and a conductivity enhancer. The target region ratio C of the anode material is $\geq 15\%$. By controlling the target region ratio C within this range, an appropriate spacing of the active material is maintained, which can effectively avoid the self-agglomeration of the active material, and avoid losing the electrical contact during lithium intercalation and de-intercalation. Meanwhile, it also facilitates subsequent permeation of carbon material, enhances the bonding of the active material and the carbon material, thus improving the electrochemical performance of the material. The aggregate has a small porosity, so that electrolyte is not easy to permeate into the aggregate. The structure of the aggregate facilitates to protect the active material particle therein, which can effectively inhibit volume expansion of the anode material, reduce expansion rate, and improve cycle performance of battery.

In an embodiment, the active material includes at least one of Li, Na, K, Sn, Ge, Si, $SiO_x$ (0<x<2), Fe, Mg, Ti, Zn, Al, P, and Cu.

In an embodiment, a median particle size of the active material is 1 nm to 500 nm.

In an embodiment, the carbon material includes at least one of the amorphous carbon, crystalline carbon, and mesocarbon microbead.

In an embodiment, a mass ratio of the active material and the carbon material is (20-70):(10-80).

In an embodiment, the aggregate further includes a metal oxide.

In an embodiment, the metal oxide is distributed among the active material, and the carbon material is filled between the active material and the metal oxide.

In an embodiment, there are pores between the active material and the metal oxide, and the pores are filled with the carbon material.

In an embodiment, the metal oxide has a chemical formula of $M_xO_y$, $0.2 \leq y/x \leq 3$, where M includes at least one of Sn, Ge, Si, Fe, Cu, Ti, Na, Mg, Al, Ca, and Zn.

In an embodiment, the metal oxide is in a form of sheet and/or strip shape.

In an embodiment, an aspect ratio of the metal oxide is greater than 2.

In an embodiment, a mass ratio of the metal oxide and the active material is (1-20): 100.

In an embodiment, the aggregate further includes a conductivity enhancer.

In an embodiment, the conductivity enhancer includes at least one of an alloy material and conductive carbon.

In an embodiment, the conductive carbon includes at least one of carbon nanotube, carbon fiber, and graphite fiber.

In an embodiment, a conductivity of the conductivity enhancer is $>10^2$ S/m.

In an embodiment, the conductivity enhancer is in a form of sheet and/or strip shape, and the conductivity enhancer has an aspect ratio of 2 to 3000.

In an embodiment, a mass ratio of the conductivity enhancer and the active material is (0.1-10): 100.

In an embodiment, a tensile strength of the conductivity enhancer is $\geq 500$ MPa.

In an embodiment, the anode material further includes a carbon layer coated on at least part of surface of the aggregate.

In an embodiment, a material of the carbon layer includes amorphous carbon.

In an embodiment, a thickness of the carbon layer is 10 nm to 1500 nm.

In an embodiment, a median particle size of the anode material is 0.5 $\mu$m to 30 $\mu$m.

In an embodiment, a specific surface area of the anode material is $\leq 10$ m$^2$/g.

In an embodiment, a pressure-resistant hardness of the anode material is $\geq 50$ MPa.

In an embodiment, a porosity of the anode material is $\leq 10\%$.

In an embodiment, a density of the aggregate satisfies following relationship: a difference between a test density of the aggregate and an average density of the aggregate is $\leq 5\%$.

In a second aspect, the present application provides a preparation method of an anode material. The preparation method includes following:

mixing raw materials containing an active material, a first carbon source, and a solvent and fully dispersing, and removing the solvent to obtain a first precursor;

performing a primary heat treatment on the first precursor at 600°C to 1200°C to obtain a second precursor; and

performing a densification treatment on the second precursor to obtain an aggregate.

In the above solution, raw materials containing an active material, a first carbon source, and a solvent are mixed and fully dispersed, which can improve dispersibility of the active material in the first precursor, and then a primary heat treatment is performed on the obtained first precursor at 600°C to 1200°C to obtain a second precursor, and a densification treatment is performed on the second precursor. During the densification treatment, the above materials agglomerate to form an aggregate, which can improve dispersibility of the active material in the aggregate, and reduce porosity of the aggregate. The entire preparation process is simple. The anode material prepared can effectively inhibit volume expansion, reduce expansion rate, and improve cycle performance of battery.

In an embodiment, the active material includes at least one of Li, Na, K, Sn, Ge, Si, SiO$_x$ (0<x<2), Fe, Mg, Ti, Zn, Al, P, and Cu.

In an embodiment, the first carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In an embodiment, a mass ratio of the first carbon source and the active material is (5-40): 100;

In an embodiment, the solvent includes an organic solvent.

In an embodiment, the organic solvent includes at least one of methanol, ethanol, ethylene glycol, propanol, isopropanol, glycerol, n-butanol, isobutanol, and pentanol.

In an embodiment, an additive is further added in the process of mixing raw materials containing an active material, a first carbon source, and a solvent and fully dispersing.

In an embodiment, the additive includes at least one of a surfactant and a coupling agent.

In an embodiment, the surfactant includes at least one of n-octadecanoic acid, lauric acid, polyacrylic acid, sodium dodecyl benzene sulfonate, n-eicosanoic acid, palmitic acid, tetradecanoic acid, undecanoic acid, cetyl trimethyl ammonium bromide, and polyvinyl pyrrolidone.

In an embodiment, the coupling agent includes a silane coupling agent, and the silane coupling agent includes at least one of γ-aminopropyl triethoxy silane, γ-glycidoxypropyl trimethoxy silane, and γ-methacryloxypropyl trimethoxy silane.

In an embodiment, a mass ratio of the active material and the additive is (15-120):(1-10).

In an embodiment, a metal oxide is further added in the process of mixing raw materials containing an active material, a first carbon source, and a solvent and fully dispersing.

In an embodiment, the metal oxide has a chemical formula of $M_xO_y$, $0.2 \leq y/x \leq 3$, where M includes at least one of Sn, Ge, Si, Fe, Cu, Ti, Na, Mg, Al, Ca, and Zn.

In an embodiment, the metal oxide is in a form of sheet and/or strip shape.

In an embodiment, an aspect ratio of the metal oxide is greater than 2.

In an embodiment, a mass ratio of the metal oxide and the active material is (1-20): 100.

In an embodiment, a conductivity enhancer is further added in the process of mixing raw materials containing an active material, a first carbon source, and a solvent and fully dispersing.

In an embodiment, a mass ratio of the conductivity enhancer and the active material is (0.1-10): 100.

In an embodiment, the conductivity enhancer includes at least one of an alloy material and a conductive carbon.

In an embodiment, the conductive carbon includes at least one of carbon nanotube, carbon fiber, and graphite fiber.

In an embodiment, a conductivity of the conductivity enhancer is $>10^2$ S/m.

In an embodiment, the conductivity enhancer is in a form of sheet and/or strip shape.

In an embodiment, an aspect ratio of the conductivity enhancer is 2 to 3000.

In an embodiment, a treatment manner of fully dispersing includes at least one of mechanical stirring, ultrasonic dispersion, and grinding dispersion.

In an embodiment, the mixing raw materials containing an active material, a first carbon source, and a solvent is performed in a manner of grading mixing.

In an embodiment, the mixing raw materials containing an active material, a first carbon source, and a solvent is specifically performed as following: mixing the active material with the solvent to form a first premix, and mixing the first carbon source with the solvent to form a second premix, and mixing the first premix with the second premix.

In an embodiment, the process of preparing the first precursor includes: mixing raw materials containing an active material, a first carbon source, and a solvent and fully dispersing, and performing a drying treatment to obtain the first precursor.

In an embodiment, a temperature of the drying treatment is 40°C to 600°C, and a time of the drying treatment is 1 h to 15 h.

In an embodiment, the densification treatment includes at least one of a fusion process, a blending process, a moulding process, an isostatic pressing process, and an impregnation process.

In an embodiment, the fusion process is mechanical fusion.

In an embodiment, a rotating speed of fusion machine used for the mechanical fusion is 300 r/min to 3000 r/min.

In an embodiment, a blade gap width of fusion machine used for the mechanical fusion is 0.01 cm to 0.9 cm.

In an embodiment, a time of the mechanical fusion is at least 0.5 h.

In an embodiment, a time of the primary heat treatment is 1 h to 10 h.

In an embodiment, a protective gas is fed during the primary heat treatment.

In an embodiment, the protective gas includes at least one of nitrogen, helium, neon, argon, and krypton.

In an embodiment, the preparation method further includes performing a carbon coating treatment on the aggregate.

In an embodiment, the carbon coating treatment includes mixing the second precursor with a second carbon source for a secondary heat treatment.

In an embodiment, a mass ratio of the second precursor and the second carbon source is (30-100):(10-70).

In an embodiment, the carbon coating treatment includes mixing the aggregate with a second carbon source for a secondary heat treatment.

In an embodiment, the second carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In an embodiment, a mass ratio of the aggregate and the second carbon source is (15-100):(10-70).

In an embodiment, a temperature of the secondary heat treatment is 600°C to 1200°C, a time of the secondary heat treatment is 1 h to 10 h.

In an embodiment, a protective gas is fed during the secondary heat treatment.

In an embodiment, the protective gas includes at least one of nitrogen, helium, neon, argon, and krypton.

In a third aspect, the present application provides a lithium ion battery including the anode material according to the first aspect, or the anode material prepared by the preparation method according to the second aspect.

The technical solutions of the present application have at least following beneficial effects:

The anode material of this embodiment includes the aggregate, and the aggregate includes the active material, the carbon material, and a conductivity enhancer. The target region ratio C of the anode material is ≥15%. In this range, an appropriate spacing of the active material is maintained, which can effectively avoid the self-agglomeration of the active material, and avoid losing the electrical contact during lithium intercalation and de-intercalation. Meanwhile, it also facilitates subsequent permeation of carbon material, enhances the bonding of the active material and the carbon material, thus improving the electrochemical performance of the material. The aggregate has a small porosity, so that electrolyte is not easy to permeate into the aggregate. The structure of the aggregate facilitates to protect the active material particle therein, which can effectively inhibit volume expansion of the anode material, reduce expansion rate, and improve cycle performance of battery.

Secondly, in the preparation method of the anode material provided by the present application, raw materials containing an active material, a first carbon source, and a solvent are mixed and fully dispersed, which can improve dispersibility of the active material in the first precursor, and then a primary heat treatment is performed on the obtained first precursor to obtain a second precursor, and a densification treatment is performed on the second precursor. During the densification treatment, the above materials agglomerate to form an aggregate, which can improve dispersibility of the active material in the aggregate, and reduce porosity of the aggregate. The entire preparation process is simple. The anode material prepared can effectively inhibit volume expansion, reduce expansion rate, and improve cycle performance of battery.

The preparation methods provided by the present application can be suitable for expanding production. The anode material prepared can effectively improve stability of charging and discharging cycle of lithium ion battery, and effectively reduce expansion rate of anode material.

**BRIEF DESCRIPTION OF DRAWINGS**

FIG. 1 is a flow chart of a preparation method of the anode material according to an embodiment of the present application;

FIG. 2 is a scanning electron microscope (SEM) photograph of the anode material prepared by Example 1 of the present application;

FIG. 3 is an XRD pattern of the anode material prepared by Example 1 of the present application;

FIG. 4 is a graph of initial charging and discharging curve of the anode material prepared by Example 1 of the present application; and

FIG. 5 is a graph of cycle performance curve of the anode material prepared by Example 1 of the present application.

**DESCRIPTION OF EMBODIMENTS**

There are preferred examples of the embodiments of the present application hereafter. It should be noted that, for ordinary person skilled in the art, without departing from the principles the embodiments of the present application, several improvements and modifications can be made which are also considered to fall in the scope of protection of the embodiments of the present application.

In an embodiment, an anode material is provided. The anode material includes an aggregate, where the aggregate includes an active material and a carbon material, and the anode material has a porosity of ≤10% and a target region ratio C of ≥15%,

where, the target region ratio C is obtained by following test method:

dividing a SEM section of an anode material particle into regions with an area of A×B, where A and B are both ≤1 μm, counting distribution of the active material within all of the regions of single the anode material particle, setting number of regions having the active material with a spacing to each other of 10 nm to 300 nm as $N_1$, setting a total number of regions having the active material with a spacing to each other of less than 10 nm and the regions having the active material with a spacing to each other of greater than 300 nm as $N_2$, and defining a target region ratio X of single the anode material particle as $X=N_1/N_2$, where C is an arithmetic average of X values of any five of the anode material particles.

It should be noted that if there are both of the active material with a spacing to each other of 10 nm and 300nm and the active material with a spacing to each other of less than 10nm or greater than 300nm in a region, the number of this region is counted into N1.

The anode material of this embodiment includes the aggregate, and the aggregate includes the active material and the carbon material. The target region ratio C of the anode material is ≥15%. In this range, an appropriate spacing of the active material is maintained, which effectively avoid the self-agglomeration of the active material, and avoid losing the electrical contact during lithium intercalation and de-intercalation. Meanwhile, it also facilitates subsequent permeation of carbon material, enhances the bonding of the active material and the carbon material, thus improving the electrochemical performance of the material. The aggregate has a small porosity, so that electrolyte is not easy to permeate into the aggregate. The structure of the aggregate facilitates to protect the active material particle therein, which can effectively inhibit volume expansion of the anode material, reduce expansion rate, and improve cycle performance of battery.

The anode material has a porosity of ≤10%. At this point, the anode material has a low porosity, i.e., its solidity is high, on one hand, it facilitates to increase the energy density of the composite material, on the other hand, even if the surface of the material with high solidity is destroyed, the electrolyte does not readily penetrate into the interior of the aggregate, which facilitates protecting the active material particles inside, reducing the probability of contact of the electrolyte with the active material, thereby facilitating the formation of a stable solid electrolyte film. In addition, the high solidity aggregate has a higher pressure-resistant hardness, which is able to offset the stress effects bringing by expansion, improve the structural stability of the anode material, can effectively inhibit volume expansion of the anode material, decrease the expansion rate, and improve cell cycle performance.

In some embodiments, the porosity of the anode materials can be 10%, 9%, 9.5%, 8%, 8.5%, 7.5%, 7%, 6.5%, 6% or 5%, and so on, or other values within the above range, which are not limited herein. It is understood that the anode material has a low porosity, i.e, its solidity is high, facilitating the formation of a stable solid electrolyte film, reducing the contact of the electrolyte with the active material. Preferably, the porosity of the anode material is ≤3%.

In some embodiments, the pressure-resistant hardness of the anode material is ≥50 MPa. Specifically, the pressure-resistant hardness of the anode materials can be 50 MPa, 250 MPa, 300 MPa, 450 MPa, 500 MPa, 750 MPa, 900 MPa, 1150 MPa, 1200 MPa or 1250 MPa, and so on, or other values within the above range, which are not limited herein. Because it has strong rigidity, and the structural stability of the particles is strong, which resist a certain volume expansion stress, thereby reducing expansion, and improving battery cycling stability. Preferably, the pressure-resistant hardness of the anode material is ≥100 MPa, more preferably, the pressure-resistant hardness of the anode material is ≥200 MPa.

In some embodiments, a density of the aggregate satisfies the following relationship: a difference between a test density and an average density of the aggregate is ≤5%. The closer the density of the aggregate particle to the average density, and the smaller the phase difference, the less the porosity inside the particles, and the more dense, which facilitate to form a stable solid electrolyte film, thus reducing the contact of the electrolyte with the active material.

Specifically, a density of the aggregate is calculated as follows: $(\rho1-\rho2)/\rho2 \le 5\%$, where $\rho1$ is the test density of the aggregate, and $\rho2$ is the average density of the aggregate.

where $\rho2$ is a sum of values of mass percentage content of each component in the aggregate * theoretical density of each component.

In a specific example, when the aggregate includes an active material, a conductivity enhancer, and a carbon material, $\rho2$= a mass percentage content of the active material in the aggregate * a theoretical density of the active material + a mass percentage content of the conductivity enhancer in the aggregate * a theoretical density of the conductivity enhancer + a mass percentage content of the carbon material in the aggregate * a theoretical density of the carbon material.

When the aggregate includes an active material, a metal oxide, a conductivity enhancer, and a carbon material, $\rho2$= a mass percentage content of the active material in the aggregate * a theoretical density of the active material + a mass percentage content of the metal oxide in the aggregate * a theoretical density of the metal oxide + a mass percentage content of the conductivity enhancer in the aggregate * a theoretical density of the conductivity enhancer + a mass percentage content of the carbon material in the aggregate * a theoretical density of the carbon material.

In some embodiments, the active material refers to a substance that can react with lithium for lithium de-intercalation and intercalation.

The active material includes at least one of an elemental metal, a metal oxide, and a metal alloy. Further, the metal includes at least one of Li, Na, K, Sn, Ge, Si, Fe, Mg, Ti, Zn, Al, P, and Cu. The elemental metal refers to the above elemental metal. The metal oxide refers to the above metal oxide. The metal alloy refers to an alloy containing at least one metal mentioned above, such as silicon lithium alloy, silicon magnesium alloy, and so on.

In some embodiments, the active material includes at least one of Li, Na, K, Sn, Ge, Si, $SiO_x$ (0<x<2), Fe, Mg, Ti, Zn, Al, P, and C.

In some embodiments, the active material is a particle, and a median particle size of the active material is 1 nm to 500 nm. Specifically, it can be 1 nm, 5 nm, 10 nm, 15 nm, 20 nm, 30 nm, 40 nm, 50 nm, 100 nm, 200 nm, 300 nm, 400 nm, or 500 nm, and so on, or other values within the above range, which are not limited herein. It is found through numerous experiments that a nanoscale active material, which have a high surface energy, easily agglomerates during charging and discharging. The particle has a strength structure that can inhibit volume expansion of silicon. However, due to the larger surface energy of the nanoscale silicon-based active particle, an agglomeration can occur easily during charging and discharging. The too small particle size of the active material result a high production cost. Preferably, the median particle size of the active material is 1 nm to 200 nm, and more preferably, 1 nm to 100 nm.

In some embodiments, the carbon material includes at least one of amorphous carbon, crystalline carbon, and mesocarbon microbead.

In some embodiments, a mass ratio of the active material and the carbon material is (20-70):(10-80). Specifically, it can be 20:10, 20:20, 20:30, 20:50, 20:60, 20:80, 40:10, 40:50, 40:80, 50:70, 50:80, and so on, or other values within the above range, which are not limited herein.

In some embodiments, the aggregate further includes a metal oxide. The metal oxide is compounded with the active material, which can reduce expansion of the active material, and improve long term cycle performance, and the aggregate has a higher pressure-resistant hardness.

In some embodiments, in the aggregate, the metal oxide is distributed among the active materials, and the carbon material is filled between the active material and the metal oxide.

Specifically, there are pores between the active material and the metal oxide, and the pores are filled with the carbon material. It is understood that, through the pore structure formed by stacking and aggregating of the active material and the metal oxide, the carbon material fills in the pores, which can improve the structure stability of the aggregates, and resist certain volume expansion stress for reducing expansion.

In some embodiments, the metal oxide has a chemical formula of $M_xO_y$, $0.2 \leq y/x \leq 3$, where M includes at least one of Sn, Ge, Si, Fe, Cu, Ti, Na, Mg, Al, Ca, and Zn. Specifically, the metal oxide can be $SiO$, $GeO_2$, $SnO_2$, $ZnO$, $TiO_2$, $Fe_3O_4$, $MgO$, $SiO_2$, $CuO$, and so on. The selected metal oxides has a lower change rate of volume expansion than that of the active material during lithium intercalation. Therefore, the metal oxide is compounded with the active material, which can reduce expansion of the active material, and improve long term cycle performance.

In some embodiments, the metal oxide is in a form of sheet and/or strip shape.

In some embodiments, an aspect ratio of the metal oxide is greater than 2. It should be noted that when the metal oxide is in a form of strip shape, the aspect ratio specifically refers to a ratio of length to particle size of the particle; when the metal oxide is in a form of sheet, the aspect ratio specifically refers to a ratio of length to width of the sheet metal oxide. Specifically, the aspect ratio of the metal oxide can be 2, 2.5, 3, 3.5, 4, 4.5, 5, 6, 7, 8, 9, 12, 15, 17, 18, 22, and so on, or other values within the above range, which are not limited herein. It can be found through numerous experiments that when the aspect ratio of the metal oxide is greater than 2, physical bonding force between the metal oxide and the active material can be increased, thereby more buffering the volume expansion variation of the active material, improving cycle performance.

In some embodiments, a mass ratio of the metal oxide to the active material is (1-20): 100. Specifically, the mass ratio of the metal oxide to the active material can be 1:100, 1.5:100, 2:100, 3:100, 4.5:100, 5:100, 6:100, 7:100, 8:100, or 9:100, and so on, or other values within the above range, which are not limited herein. If the metal oxide content is excessively high, initial efficiency of the material decreases, and if the metal oxide content is excessively low, rigidity of it contributing to the aggregate structure decreases, and cycle stability of the particle decreases.

In some embodiments, the aggregate further includes a conductivity enhancer.

In some embodiments, a tensile strength of the conductivity enhancer is ≥500 MPa, and a dispersibility N of the conductivity enhancer in the anode material is N≥1. The dispersibility N is obtained by following test method: dividing a SEM section of an anode material particle into regions with area of A×B, where A and B are both ≤1 micron, counting the distribution of the conductive enhancer within all of the regions of single the anode material particle, seting number of regions having the conductive enhancer with a spacing to each other of <10 nm as Na, seting number of regions having the conductive enhancer with a spacing to each other all of ≥10 nm as Nb, and defining dispersibility C of the conductive enhancer in single the anode material particle as C = Nb/Na, where N is an arithmetic average of C values of any 5 particles of the anode material. Uniform dispersing of the conductive enhancer can effectively improve transport of charge carrier inside the aggregate, enhancing conductivity of the aggregate. Moreover, the conductive enhancer can effectively improve the structure stability of the aggregate, thus strengthening structure strength of the aggregate, avoiding stress change caused by expansion effect of the active material, maintaining structure stability of the aggregate, thereby improving cycle stability performance of the material, and decreasing the expansion rate. The tensile strength of the conductive enhancer is controlled to ≥500 MPa, such that the conductive enhancer has an excellent mechanical property, and can play a role of a support for the structure to enhance the stability of the material. By controlling the minimum spacing between the conductive enhancers, the conductive enhancer can be filled with the active material between them, and the conductive enhancer can play a role of a support for the structure to enhance the stability of the material, thereby buffering volume expansion variation of the active material, and improving cycle performance.

The tensile strength of the conductivity enhancer can be 500 MPa, 800 MPa, 1 GPA, 5 GPA, 10 GPA, 25 GPA,

30 GPa, 45 GPa, or 50 GPa, and so on, or other values within the above range, which are not limited herein.

The conductivity enhancer is distributed inside and/or on surface of the aggregate.

In some embodiments, the conductivity enhancer is distributed among the active material, and the carbon material is filled between the active material and the conductive enhancer. It is understood that, by distributing the conductive enhancer in the active material, the conductivity of the active material can be improved, and transport of charge carrier inside the active material can be improved.

In some embodiments, there are pores formed between the carbon material and the conductive enhancer due to stacking and aggregating, and the pores are filled with the active material. It is understood that, a pore structure is formed between the carbon material and the conductive enhancer, in which the active material can be filled, thus structure strength of the aggregate can be improved, and stress change caused by expansion of active material can be resisted though the pore structure, for maintaining structure stability of the aggregate

In some embodiments, the conductivity enhancer includes at least one of an alloy material and a conductive carbon. Definitely, it is understood that, any other conductive material with a tensile strength of ≥500 MPa can be used as the conductivity enhancer.

In some embodiments, the conductive carbon includes at least one of carbon nanotube, carbon fiber, and graphite fiber.

In some embodiments, the alloy material is an alloy with a conductivity of $>10^2$ S/m and a tensile strength of ≥500 MPa.

In some embodiments, the alloy material includes at least one of a silicon alloy, an aluminum alloy, a copper alloy, an aluminum alloy, and a lithium alloy. Further, the silicon alloy includes at least one of nickel silicon alloy, iron silicon alloy, copper silicon alloy, silicon manganese alloy, and aluminum silicon alloy.

In some embodiments, the conductivity of the conductivity enhancer is $>10^2$ S/m. Specifically, the conductivity of the conductivity enhancer can be 100 S/m, $10^3$ S/m, $10^4$ S/m, $10^5$ S/m, $10^8$ S/m, and so on. In this range, the conductivity enhancer effectively improve transport of charge carrier inside the aggregate, enhancing the conductivity of the aggregate.

In some embodiments, the conductivity enhancer is in a form of sheet and/or strip shape.

In some embodiments, an aspect ratio of the conductivity enhancer is 2 to 3000. It is noted that when the conductive enhancer is in a form of strip shape, the aspect ratio specifically refers to the ratio of length to particle size of the particle, where the particle size refers to the maximum straight-line distance between two points on the periphery of the cross-section perpendicular to the length of the conductive enhancer in the form of strip shape; when the metal oxide is in a form of sheet, the aspect ratio specifically refers to the ratio of length to width of the sheet conductive enhancer. Specifically, the aspect ratio of the conductivity enhancer can be 2, 30, 46, 150, 360, 670, 800, 900, 1500, 2000, or 3000, and so on, or other values within the above ranges, which are not limited herein. It is found through numerous experiments that the conductive enhancer with the aspect ratio in this range has a superior mechanical property, which play a role of a support for the structure to enhance the stability of the material, thereby buffering volume expansion variation of the active material, and improving cycling performance.

In some embodiments, a tensile strength of the conductivity enhancer is ≥500 MPa. It is noted that when the tensile strength of the conductivity enhancer is excessively low, it is difficult for the conductive enhancer to resist the stress change caused by the expansion of the active material, and to maintain the structure stability of the aggregate, which does not facilitate to improve the cycling performance of the material. Specifically, the tensile strength of the conductivity enhancer can be 500 Mpa, 520 Mpa, 550 Mpa, 580 Mpa, 600 Mpa, 650 Mpa, 700 Mpa, 750 Mpa, or 800 Mpa, and so on, or other values within the above range, which are not limited herein. It is found through numerous experiments that when the tensile strength of the conductive enhancer is controlled to the above range, the conductive enhancer has an excellent mechanical property, and can play a role of a support for the structure to enhance stability of the material, thereby buffering volume expansion variation of the active material, and improving cycle performance.

In some embodiments, a mass ratio of the conductivity enhancer and the active material is (0.1-10): 100. Specifically, it can be 0.1:100, 0.5:100, 0.8:100, 1:100, 2:100, 3:100, 5:100, 6:100, 7:100, 8:100, 10:100, and so on, or other values within the above range, which are not limited herein.

Further, the anode material further includes a carbon layer coated on at least part of surface of the aggregate. Preferably, the carbon layer is distributed on surface of the aggregate.

In some embodiments, the carbon layer includes amorphous carbon.

In some embodiments, a thickness of the carbon layer is 10 nm to 1500 nm. It is understood that, the carbon layer coated on surface of the aggregate is capable of reducing contact of the active material with electrolyte, reducing the generation of passivation film, and increasing reversible capacity of battery.

Specifically, the thickness of the carbon layer can be 10 nm, 50 nm, 180 nm, 200 nm, 350 nm, 400 nm, 550 nm, 700 nm, 850 nm, 900 nm, 1050 nm, 1200 nm or, 1500 nm, and so on, or other values within the above range, which are not limited herein. When the carbon layer is excessively thick, proportion of carbon is excessively high, it does not facilitate to obtain a high specific capacity composite; when the carbon layer is excessively thin, it does not facilitate to increase conductivity of the anode material, and volume expansion inhibition performance of the material is weak, resulting in a poor long cycle performance. Preferably, the thickness of the carbon layer is 50 nm to 800 nm; more preferably, the thickness of the carbon layer is 100 nm to 500 nm.

It is noted that, in some embodiments, the anode material in which the carbon layer is coated on surface of the aggregate has a porosity of ≤10%, and a pressure-resistant hardness of ≥50 MPa. Keeping the overall porosity and the pressure-resistant hardness of the anode material within these ranges can further enhance performance of the anode material.

In some embodiments, a median particle size of the anode material is 0.5 $\mu$m to 30 $\mu$m. Specifically, it can be 0.5 $\mu$m, 1 $\mu$m, 5 $\mu$m, 8 $\mu$m, 10 $\mu$m, 13 $\mu$m, 15 $\mu$m, 18$\mu$m, 20 $\mu$m, 25 $\mu$m, or 30 $\mu$m, and so on, or other values within the above range, which are not limited herein. It is understood that controlling the median particle diameter of the anode material within the above range facilitate to improve cycle performance of the anode material.

In some embodiments, a specific surface area of the anode material is ≤10 m$^2$/g. Specifically, it can be 10 m$^2$/g, 8 m$^2$/g, 7 m$^2$/g, 5 m$^2$/g, 3 m$^2$/g, 2 m$^2$/g, 1 m$^2$/g, or 0.5 m$^2$/g, and so on, or other values within the above range, which are not limited herein. It is understood that controlling the specific surface area of the anode material within the above ranges facilitate to inhibit volume expansion, and to improve cycle performance of the anode material.

It is noted that the anode material of the various embodiments described above may be combined optionally without contradiction, such as a combined limitation of the pressure-resistant hardness, porosity and density of the aggregate.

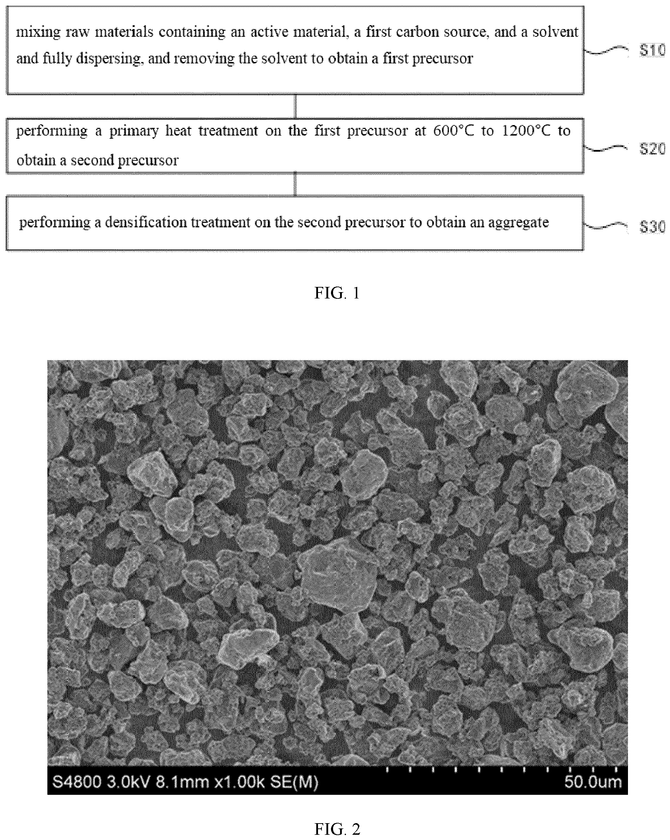

In another aspect, the present application provides a preparation method of an anode material. As shown in FIG. 1, the preparation method includes following:

Step S10, mixing raw materials containing an active material, a first carbon source, and a solvent and fully dispersing, and removing the solvent to obtain a first precursor;
Step S20, performing a primary heat treatment on the first precursor at 600°C to 1200°C to obtain a second precursor; and
Step S30, performing a densification treatment on the second precursor to obtain an aggregate.

In the above preparation method of this embodiment, raw materials containing an active material, a first carbon source, and a solvent are mixed and fully dispersed, which can improve dispersibility of the active material in the first precursor, and then a primary heat treatment is performed on the first precursor at 600°C to 1200°C to obtain a second precursor, and a densification treatment is performed on the second precursor. During the densification treatment, the above materials agglomerate to form an aggregate, which can improve dispersibility of the active material in the aggregate, and reduce porosity of the aggregate. The entire preparation process is simple. The anode material prepared can effectively inhibit volume expansion, reduce expansion rate, and improve cycle performance of battery.

The preparation method of the present application are described in detail below in connection with the embodiments:

Step S10, mixing raw materials containing an active material, a first carbon source, and a solvent and fully dispersing, and removing the solvent to obtain a first precursor.

In some embodiments, the process of mixing raw materials containing an active material, a first carbon source, and a solvent is performed in a manner of grading mixing. Specifically, the grading mixing is achieved by mixing the active material with the solvent to form a first premix, and mixing the first carbon source with the solvent to form a second premix, and mixing the first premix with the second premix. An appropriate grading mixing operation is selected according to specific components of the active material, the first carbon sources, and the solvents in accordance with principle of grading mixing, so that the active material is fully dispersed, in order to achieve a target region ratio C of the final anode material being ≥15%.

In some embodiments, a treatment manner of fully dispersing includes at least one of mechanical stirring, ultrasonic dispersion, and grinding dispersion. It is understood that, fully dispersing is not limited to the above manners. Any method being able to fully disperse the active material to achieve the target area proportion C in the final anode material being ≥ 15% can be used.

In some embodiments, the active material refers to a substance that can react with lithium for lithium de-intercalation and intercalation.

The active material includes at least one of an elemental metal, a metal oxide and a metal alloy. Further, the metal includes at least one of Li, Na, K, Sn, Ge, Si, Fe, Mg, Ti, Zn, Al, P, and Cu.

In some embodiments, the active material includes at least one of Li, Na, K, Sn, Ge, Si, SiO$_x$ (0<x<2), Fe, Mg, Ti, Zn, Al, P, and C.

In some embodiments, the active material can be the above elemental metal, and further, the active material can be specifically Si, Sn, Ge, and Al. In some other embodiments, the active material can also be an alloy formed of at least two of the foregoing metals, such as a silicon lithium alloy, a silicone magnesium alloy, and so on. In other embodiments, the active material can also be an oxide of the foregoing metal, such as silicon monoxide. Definitely, it is noted that, in some instances, the active material includes at least two of the elemental metal, the metal alloy, and the metal oxide.

In some embodiments, the active material is particles, and the median particle size of the active material is 1nm to 500nm. Specifically, it can be 1nm, 5nm, 10nm, 15nm, 20nm, 30nm, 40nm, 50nm, 100nm, 200nm, 300nm, 400nm or 500nm, and so on, or other values within the above range, which are not limited herein. It can be found through multiple tests that with the active material in nanoscale, particles have a stable structure, which can inhibit volume expansion of silicon. However, due to the larger surface energy of the silicon-based active nanoparticles, agglomeration is easy to occur during charging and discharging processes. If the particle size of the active material is excessively small, the cost of production process is high. Preferably, the median particle size of the active material is 1nm to 200nm, and more preferably, 1nm to 100nm. a particle, and a median particle size of the active material is 1 nm to 500 nm. Specifically, it can be 1 nm, 5 nm, 10 nm, 15 nm, 20 nm, 30 nm, 40 nm, 50 nm, 100 nm, 200 nm, 300 nm, 400 nm, or 500 nm, and so on, or other values within the above range, which are not limited herein. It is found through numerous experiments that as a nanoscale active material, the particle has a strength structure that can inhibit volume expansion of the active material. However, due to larger surface energy of the nanoscale active particle, an agglomeration can occur easily during charging and discharging. The too small particle size of the active material result a high production cost. Preferably, the median particle size of the active material is 1 nm to 200 nm, and more preferably, 1 nm to 100 nm.

In some embodiments, the first carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In some embodiments, the solvent includes an organic solvent, and the organic solvent includes at least one of methanol, ethanol, ethylene glycol, propanol, isopropanol, glycerol, n-butanol, isobutanol, and pentanol.

In some embodiments, an additive is further added in the process of mixing raw materials containing an active material, a first carbon source, and a solvent and fully dispersing. The additive can effectively enhance connection stability between the active material and the first carbon source, thereby forming a stable system, and reducing expansion rate of pole piece.

In some embodiments, a mass ratio of the first carbon source and the active material is (5-40):100. Specifically, it can be 5:100, 10:100, 15:100, 20:100, 25:100, 30:100, 35:100, 38:100, or 40:100, and so on. The mass ratio of the first carbon source and the active material should not be excessively high, that is, the content of the first carbon source should not be excessively high. Otherwise it does not facilitate to form a precursor with high porosity, affecting subsequent treatment.

In some embodiments, the additive includes at least one of a surfactant and a coupling agent.

The surfactant includes at least one of n-octadecanoic acid, lauric acid, polyacrylic acid, sodium dodecyl benzene sulfonate, n-eicosanoic acid, palmitic acid, tetradecanoic acid, undecanoic acid, cetyl trimethyl ammonium bromide, and polyvinyl pyrrolidone.

The coupling agent includes a silane coupling agent, and the silane coupling agent includes at least one of $\gamma$-aminopropyl triethoxy silane, $\gamma$-glycidoxypropyl trimethoxy silane, and $\gamma$-methacryloxypropyl trimethoxy silane.

In some embodiments, a conductivity enhancer is further added in the process of mixing raw materials containing an active material, an additive, a first carbon source, and a solvent and fully dispersing.

In some embodiments, the conductivity enhancer includes at least one of an alloy material and a conductive carbon.

In some embodiments, the conductive carbon includes at least one of carbon nanotube, carbon fiber, and graphite fiber.

In some embodiments, a conductivity of the conductivity enhancer is >$10^2$ S/m. Specifically, the conductivity of the conductivity enhancer can be 100 S/m, $10^3$ S/m, $10^4$ S/m, $10^5$ S/m, $10^8$ S/m, and so on.

In some embodiments, the conductivity enhancer is in a form of sheet and/or strip shape.

In some embodiments, an aspect ratio of the conductivity enhancer is 2 to 3000. It is noted that when the conductive enhancer is in a form of strip shape, the aspect ratio specifically refers to the ratio of length to particle size of the particle, where the particle size refers to the maximum straight-line distance between two points on the periphery of the cross-section perpendicular to the length of the conductive enhancer in the form of strip shape; when the conductive enhancer is in a form of sheet, the aspect ratio specifically refers to the ratio of length to width of the sheet conductive enhancer. Specifically, the aspect ratio of the conductivity enhancer can be 2, 30, 46, 150, 360, 670, 800, 900, 1500, 2000, or 3000, and so on, or other values within the above ranges, which are not limited herein. It is found through numerous experiments that the conductive enhancer with the aspect ratio in this range has a superior mechanical property, which play a role of a support for the structure to enhance the stability of the material, thereby buffering volume expansion variation of the active material, and improving cycling performance.

In some embodiments, a mass ratio of the conductivity enhancer and the active material is (0.1-10):100. Specifically, the mass ratio of the conductivity enhancer and the active material is 0.1:100, 0.5:100, 1:100, 2:100, 2.6:100, 3:100, 3.5:100, 4:100, 4.8:100, 6:100, 7:100, 8.5:100, or 10:100, and so on, or other values within the above range, which are not limited herein.

In some embodiments, a metal oxide is further added in the process of mixing raw materials containing an active material, an additive, a first carbon source, and a solvent and fully dispersing.

In some embodiments, the metal oxide has a chemical formula of $M_xO_y$, $0.2 \leq y/x \leq 3$, where M includes at least one of Sn, Ge, Si, Fe, Cu, Ti, Na, Mg, Al, Ca, and Zn.

In some embodiments, the metal oxide is in a form of sheet and/or strip shape.

In some embodiments, an aspect ratio of the metal oxide is greater than 2.

In some embodiments, a mass ratio of the metal oxide and the active material is (1-20):100. Specifically, the mass ratio of the metal oxide and the active material can be 1:100, 1.5:100, 2:100, 3:100, 4.5:100, 5:100, 6:100, 7:100, 8:100, 10:100, 15:100, 20:100, and so on, or other values within the above range, which are not limited herein. If the metal oxide content is excessively high, initial efficiency of the material decreases, and if the metal oxide content is excessively low, rigidity of it contributing to the aggregate structure decreases, and cycle stability of the anode material decreases.

In some embodiments, the fully dispersion treatment includes at least one mechanical stirring, ultrasonic dispersion, and grinding dispersion. Preferably, the grinding dispersion is applied, such that the active material can be dispersed, avoiding agglomeration of the active material together, and allowing the active material to disperse into smaller nanoparticles. Preferably, a wet ball milling is applied, dispersion time of the wet ball milling can be controlled to 0.5 h to 10 h. The mixing of components can be more uniform by sufficient grinding, so that particle size of the active material reaches to 1 nm to 500 nm.

In some embodiments, in the process of mixing raw materials containing an active material, a first carbon source, and a solvent and fully dispersing, and removing the solvent to obtain a first precursor, the manner of removing the solvent includes a drying treatment.

In some embodiments, a temperature of the drying treatment is 40°C to 600°C. Specifically, it can be 40°C, 50°C, 80°C, 100°C, 120°C, 250°C, 380°C, 400°C, 500°C, 580°C, or 600°C, and so on. A time of the drying treatment is 1 h to 15 h. Specifically, it can be 1 h, 3 h, 5 h, 7 h, 9 h, 10 h, 12 h, or 15 h, and so on. The manner of the drying treatment may be, for example, oven drying, freeze drying, blending steaming, and spray drying, and so on. The drying treatment in the present embodiment can remove the solvent in precursor solution as much as possible.

The dried first precursor can further be dispersed. The dispersion can be grinding dispersion, and a time of the dispersion is 0.5 h to 9 h. Specifically, it can be 0.5 h, 1.5 h, 2.5 h, 3.5 h, 4.5 h, 5.5 h, 7.5 h, or 9 h, and so on. The grinding dispersion in the embodiment can control the particle size after dispersion.

In some embodiments, during the dispersion of the dried first precursor, a second carbon source can be further added. A mass ratio of the first precursor and the second carbon source is (10-80):10. A secondary drying is performed after dispersion to obtain a first precursor coated by carbon.

Step S20, performing a primary heat treatment on the first precursor to obtain a second precursor.

In some embodiments, the primary heat treatment can be, for example, vacuum sintering, hot-pressed sintering, or atmospheric sintering.

In some embodiments, a temperature of the primary heat treatment is 600°C to 1200°C, for example, 600°C, 700°C, 800°C, 900°C, 1000°C, 1100°C, 1200°C, and so on. Preferably, the temperature of the primary heat treatment is 600°C to 1000°C.

In some embodiments, a time of the primary heat treatment is 1 h to 10 h, for example, 1 h, 2 h, 3 h, 4 h, 5 h, 6 h, 7 h, 8 h, 9 h, or 10 h, and so on.

A heating rate of the heat treatment is 1°C/min to 30°C/min. Specifically, it can be 1°C/min, 5°C/min, 10°C/min, 15°C/min, 20°C/min, 25°C/min, or 30°C/min, and so on. For example, preferably, the heating rate of the heat treatment is 1°C/min to 15°C/min.

A protective gas is fed during the heat treatment process, and the protective gas includes at least one of nitrogen, helium, neon, argon, or krypton.

Step S30, performing a densification treatment on the second precursor to obtain an aggregate. Through the densification treatment, the porosity of the aggregate obtained is ≤10%.

In some embodiments, the densification treatment includes at least one of a fusion process, a blending process, a moulding process, an isostatic pressing process, and an impregnation process.

In some embodiments, the fusion process is mechanical fusion. Performing a fusion process on the precursor increases the pressure-resistant hardness of the anode material, and further undergoing the precursor a primary heat treatment improves the stability of the particle structure as well as improves the connection stability between the active material and the first carbon source and reduces porosity. Definitely, in other embodiments, other processes may also be employed for the densification treatment, such as moulding, isostatic pressing, impregnation, and so on, providing the aggregate has a porosity of ≤10%.

In some embodiments, a pressure-resistant hardness of the aggregate is ≥50 MPa, and the pressure-resistant hardness of the aggregate can be specifically 50 MPa, 250 MPa, 300 MPa, 450 MPa, 500 MPa, 750 MPa, 900 MPa, 1150 MPa, 1200 MPa or 1250 MPa, and so on, or other values within the above range, which are not limited herein. Because it has strong rigidity, and the structural stability of the particles is strong, which resist a certain volume expansion stress, thereby reducing expansion, and improving battery cycling stability. Preferably, the pressure-resistant hardness of the aggregate is ≥100 MPa, more preferably, the pressure-resistant hardness of the aggregate is ≥200 MPa.

In some embodiments, the porosity of the final anode material is ≤10%, and the pressure-resistant hardness of the anode material is ≥50 MPa. At this point, the porosity and the pressure-resistant hardness of the aggregate can be controlled according to state of the final carbon coating layer, so as to finally make the porosity and the pressure-resistant hardness of the anode material reach target values.

In some embodiments, during fusing, a rotating speed of fusion machine is 300 r/min to 3000r/min. Specifically, it can be 300 r/min, 1000 r/min, 1500 r/min, 2000 r/min, 2500 r/min, or 3000 r/min, and so on. A blade gap width of fusion machine is 0.01 cm to 0.9 cm. Specifically, it can be 0.01 cm, 0.05 cm, 0.1 cm, 0.15 cm, 0.2 cm, 0.25 cm, 0.3 cm, 0.5 cm, or 0.9cm, and so on. A time of the fusion is at least 0.5 h. Specifically, it can be 0.5 h, 0.8 h, 0.9 h, 1.0 h, 1.5 h, or 2 h, and so on, which are not limited herein.

Step S40, performing a carbon coated on the aggregate to obtain an anode material.

It is noted that the anode material of the present embodiment may not be carbon coated, in this case the step S40 can be omitted. In some embodiments, the process of carbon coating includes mixing the aggregate with a second carbon source for a secondary heat treatment, to form a carbon layer on surface of the aggregate.

In some embodiments, the second carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In some embodiments, a mass ratio of the aggregate and the second carbon source is (20-100):(10-120). Specifically, the mass ratio of the aggregate and the second carbon source is 100:25, 100:35, 100:45, 100:55, 100:65, and so on, or other values within the above range, which are not limited herein.

In other embodiments, other ways can also be employed for performing a carbon coated on the aggregate. Specifically, the process of carbon coating includes mixing the second precursor with a second carbon source for a secondary heat treatment, to form a carbon layer on surface of the second precursor.

In some embodiments, a mass ratio of the second precursor and the second carbon source is (30-100):(10-70). The mass ratio of the second precursor and the second carbon source is 50:25, 100:20, 100:35, 100:45, 100:55, 100:65, and so on, or other values within the above range, which are not limited herein.

In some embodiments, a temperature of the secondary heat treatment is 600°C to 1200°C, for example, 600°C, 700°C, 800°C, 900°C, 1000°C, 1100°C, 1200°C, and so on. Preferably, the temperature of the secondary heat treatment is 600°C to 1000°C.

In some embodiments, a time of the secondary heat treatment is 1 h to 10 h, for example, 1 h, 2 h, 3 h, 4 h, 5 h, 6 h, 7 h, 8 h, 9 h, or 10 h, and so on.

In some embodiments, a heating rate of the secondary heat treatment is 1°C/min to 30°C/min. Specifically, it can be 1°C/min, 5°C/min, 10°C/min, 15°C/min, 20°C/min, 25°C/min, or 30°C/min, and so on. For example, preferably, the heating rate of the secondary heat treatment is 1°C/min to 15°C/min.

In some embodiments, a protective gas is fed during the secondary heat treatment process, and the protective gas includes at least one of nitrogen, helium, neon, argon, or krypton.

In some embodiments, a manner of the mixing can includes magnetic stirring, mechanical stirring, ultrasonic dispersion, grinding dispersion, and so on.

It is noted that the anode material of the present embodiment may not be carbon coated, or not limited to undergoing the above two carbon coating methods.

In some embodiments, after the secondary heat treatment, at least one of crushing, sieving and demagnetizing is further performed. Preferably, after the secondary heat treatment, crushing, sieving and demagnetizing are performed in sequence.

In some embodiments, the manner of the crushing is performed by means of any one of a mechanical crusher, a gas flow crusher, and a low temperature crusher.

In some embodiments, the manner of the sieving is performed by means of any one of a fixed sieve, a drum screen, a resonance screen, a roller screen, a vibratory screen, and a chain sieve, where a mesh number of the sieving is ≥500 mesh. Specifically, a mesh number of the sieving can be 500 mesh, 600 mesh, 700 mesh, 800 mesh, and so on. Controlling the particle size of the anode material within the above ranges facilitates increasing cycle performance of the anode material.

In some embodiments, a device for the demagnetizing is any one of a permanent magnet drum separator, an electromagnetic deferromagnetic machine, and a pulsating high gradient magnetic separator. The demagnetizing is to control magnetic material content of resulting anode material, so as to avoid affecting of magnetic material on discharging effect of lithium ion battery and safety of battery in using.

The present application further provides a lithium ion battery including the anode material as described above .

The embodiments of the present application are further illustrated by the following several examples. The embodiments herein are not limited to the specific examples described below. Variations may be made as appropriate within the scope of the independent claims.

The target region ratio C is obtained by following test method:

dividing a SEM section of an anode material particle into regions with an area of $A \times B$, where A and B are both $\leq 1$ $\mu$m, counting distribution of the active material within all of the regions of single the anode material particle, setting number of regions having the active material with a spacing to each other of 10 nm to 300 nm as N1, setting a total number of regions having the active material with a spacing to each other of less than 10 nm and the regions having the active material with a spacing to each other of greater than 300 nm as N2, and defining a target region ratio X of single the anode material particle as X=N1/N2, where C is an arithmetic average of X values of any five of the anode material particles.

## Example 1

The preparation method of anode material of this Example included following:

(1) silicon powder with a median particle size of 100 nm, alkylphenol polyoxyethylene ether, and phenolic resin were added to ethylene glycol solution in a mass ratio of 50:3.6:16.4, followed by performing a ultrasonic dispersion for 60 minutes to obtain a dispersion solution. Then the dispersion solution was placed in a ball mill for grinding dispersion for 6 h to obtain a first precursor solution, followed by performing a freeze drying treatment to obtain a first precursor;
(2) the first precursor was placed in a heat treatment furnace fed with nitrogen, heated to 890°C for a primary heat treatment, and kept temperature for 4 h to obtain a second precursor;
(3) the second precursor was placed in a fusion machine with a rotating speed of 400 r/min and a blade gap width of 0.8 cm for mechanical fusion for 2 h, to obtain an aggregate; and
(4) the aggregate was mixed with sucrose in a mass ratio of 80:89. Then the mixed material was placed into a high temperature box furnace fed with nitrogen for a secondary heat treatment at 850°C, kept temperature for 4 h, and then crushed and sieved through a 500-meash sieve, to obtain an anode material.

The anode material prepared by this Example includes an aggregate and a carbon layer coated on surface of the aggregate. The aggregate includes nano-silicon powder and a carbon material in a mass ratio of 64.6:35.4.

The anode material has a median particle size of 13.2 $\mu$m and a specific surface area of 3.5 $m^2$/g, and an average thickness of the carbon layer of 350 nm.

The anode material has a target region ratio C of 15% tested by the test method of the target region ratio C described above.

The anode material has a porosity of 2.0% tested by a mercury intrusion method on anode material particle.

The anode material has a pressure-resistant hardness of 155 MPa in average tested by a nanoindentation on anode material particle.

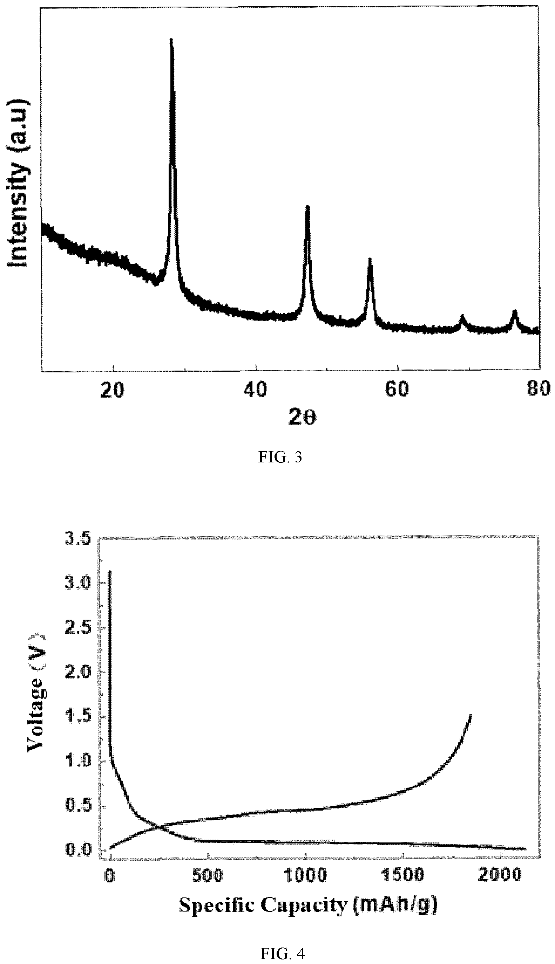

FIG. 2 is a scanning electron microscope (SEM) photograph of the anode material prepared by Example 1 of the present application; and FIG. 3 is an XRD pattern of the anode material prepared by Example 1 of the present application. As shown in FIG. 3, there is a peak of silicon peak in the anode material.

## Example 2

The preparation method of anode material of this Example included following:

(1) silicon powder with a median particle size of 40 nm, $\gamma$-aminopropyl triethoxy silane, and phenolic resin, and phenolic resin were added to ethylene glycol solution in a mass ratio of 60:2.6:17.4, followed by performing a ultrasonic dispersion for 60 minutes to obtain a dispersion solution. Then the dispersion solution was placed in a ball mill for grinding dispersion for 6 h to obtain a first precursor solution, followed by performing a freeze drying treatment to obtain a first precursor;
(2) the first precursor was placed in a heat treatment furnace fed with nitrogen, heated to 850°C for a primary heat treatment, and kept temperature for 4 h to obtain a second precursor;
(3) the second precursor was placed in a fusion machine with a rotating speed of 600 r/min and a blade gap width of 0.7 cm for mechanical fusion for 1.5 h, to obtain an aggregate; and
(4) the aggregate was mixed with asphalt in a mass ratio of 70:64. Then the mixed material was placed into a high temperature box furnace fed with nitrogen for a secondary heat treatment at 850°C, kept temperature for 4 h, and then crushed and sieved through a 500-meash sieve, to obtain an anode material.

The anode material prepared by this Example includes an aggregate and a carbon layer coated on surface of the aggregate. The aggregate includes nano-silicon powder and a carbon material in a mass ratio of 61.6:38.4.

The anode material has a median particle size of 12.2 μm and a specific surface area of 3.1 m$^2$/g, and an average thickness of the carbon layer of 380 nm.

The anode material has a target region ratio C of 35% tested by the test method of the target region ratio C described above.

The anode material has a porosity of 1.6% tested by a mercury intrusion method on anode material particle.

The anode material has a pressure-resistant hardness of 231 MPa in average tested by a nanoindentation on anode material particle.

**Example 3**

The preparation method of anode material of this Example included following:

(1) silicon powder with a median particle size of 30 nm, sodium dodecyl benzene sulfonate, and citric acid were added to ethylene glycol solution in a mass ratio of 45:4.6:14.4, followed by performing a ultrasonic dispersion for 40 minutes to obtain a dispersion solution. Then the dispersion solution was placed in a ball mill for grinding dispersion for 6 h to obtain a precursor solution, followed by performing a freeze drying treatment to obtain a precursor;

(2) the first precursor was placed in a heat treatment furnace fed with nitrogen, heated to 800°C for a primary heat treatment, and kept temperature for 4 h to obtain a second precursor;

(3) the second precursor was placed in a fusion machine with a rotating speed of 400 r/min and a blade gap width of 0.6 cm for mechanical fusion for 2.5 h, to obtain an aggregate; and

(4) the aggregate was mixed with asphalt in a mass ratio of 40:54. Then the mixed material was placed into a high temperature box furnace fed with nitrogen for a secondary heat treatment at 850°C, kept temperature for 2 h, and then crushed and sieved through a 500-meash sieve, to obtain an anode material.

The anode material prepared by this Example includes an aggregate and a carbon layer coated on surface of the aggregate. The aggregate includes nano-silicon powder and a carbon material in a mass ratio of 57.1:42.9.

The anode material has a median particle size of 10.2 μm and a specific surface area of 2.1 m$^2$/g, and an average thickness of the carbon layer of 580 nm.

The anode material has a target region ratio C of 45% tested by the test method of the target region ratio C described above.

The anode material has a porosity of 2.3% tested by a mercury intrusion method on anode material particle.

The anode material has a pressure-resistant hardness of 123 MPa in average tested by a nanoindentation on anode material particle。

**Example 4**

The preparation method of anode material of this Example included following:

(1) silicon powder with a median particle size of 80 nm, undecanoic acid, and fructose were added to butanol solution in a mass ratio of 40:2.6:7.4, followed by performing a ultrasonic dispersion for 60 minutes to obtain a dispersion solution. Then the dispersion solution was placed in a ball mill for grinding dispersion for 8 h to obtain a first precursor solution, followed by performing a spray drying treatment to obtain a first precursor;

(2) the first precursor was placed in a heat treatment furnace fed with nitrogen, heated to 820°C for a primary heat treatment, and kept temperature for 4 h to obtain a second precursor;

(3) the second precursor was placed in a fusion machine with a rotating speed of 480 r/min and a blade gap width of 0.6 cm for mechanical fusion for 3 h, to obtain an aggregate; and

(4) the aggregate was mixed with phenolic resin in a mass ratio of 38:63. Then the mixed material was placed into a high temperature box furnace fed with nitrogen for a secondary heat treatment at 880°C, kept temperature for 2 h, and then crushed and sieved through a 500-meash sieve, to obtain an anode material.

The anode material prepared by this Example includes an aggregate and a carbon layer coated on surface of the aggregate. The aggregate includes nano-silicon powder and a carbon material in a mass ratio of 49.4:50.6.

The anode material has a median particle size of 10.5 μm and a specific surface area of 2.0 m$^2$/g, and an average thickness of the carbon layer of 680 nm.

The anode material has a target region ratio C of 52% tested by the test method of the target region ratio C described above.

The anode material has a porosity of 3.1% tested by a mercury intrusion method on anode material particle.
The anode material has a pressure-resistant hardness of 301 MPa in average tested by a nanoindentation on anode material particle.

**Example 5**

The preparation method of anode material of this Example included following:

(1) silicon powder with a median particle size of 40 nm, γ-methacryloxypropyl trimethoxy silane, and asphalt were added to butanol solution in a mass ratio of 46:4.5: 13.5, followed by performing a ultrasonic dispersion for 60 minutes to obtain a dispersion solution. Then the dispersion solution was placed in a ball mill for grinding dispersion for 4 h to obtain a first precursor solution, followed by performing a spray drying treatment to obtain a first precursor;
(2) the first precursor was placed in a heat treatment furnace fed with nitrogen, heated to 720°C for a primary heat treatment, and kept temperature for 3 h to obtain a second precursor;
(3) the second precursor was placed in a fusion machine with a rotating speed of 580 r/min and a blade gap width of 0.5 cm for mechanical fusion for 2 h, to obtain an aggregate; and
(4) the aggregate was mixed with phenolic resin in a mass ratio of 58:63. Then the mixed material was placed into a high temperature box furnace fed with nitrogen for a secondary heat treatment at 880°C, kept temperature for 2 h, and then crushed and sieved through a 500-meash sieve, to obtain an anode material.

The anode material prepared by this Example includes an aggregate and a carbon layer coated on surface of the aggregate. The aggregate includes nano-silicon powder and a carbon material in a mass ratio of 47.2:52.8.
The anode material has a median particle size of 13.5 $\mu$m and a specific surface area of 1.9 m$^2$/g, and an average thickness of the carbon layer of 850 nm.
The anode material has a target region ratio C of 38% tested by the test method of the target region ratio C described above.
The anode material has a porosity of 2.4% tested by a mercury intrusion method on anode material particle.
The anode material has a pressure-resistant hardness of 266 MPa in average tested by a nanoindentation on anode material particle.

**Example 6**

The preparation method of anode material of this Example included following:

(1) Ge powder with a median particle size of 40 nm, n-octadecanoic acid, and glucose were added to propanol solution in a mass ratio of 46:4.5:9.5, followed by performing a ultrasonic dispersion for 80 minutes to obtain a dispersion solution. Then the dispersion solution was placed in a ball mill for grinding dispersion for 4 h to obtain a first precursor solution, followed by performing a spray drying treatment to obtain a first precursor;
(2) the first precursor was placed in a heat treatment furnace fed with nitrogen, heated to 790°C for a primary heat treatment, and kept temperature for 3 h to obtain a second precursor;
(3) the second precursor was placed in a fusion machine with a rotating speed of 540 r/min and a blade gap width of 0.8 cm for mechanical fusion for 2 h, to obtain an aggregate; and
(4) the aggregate was mixed with phenolic resin in a mass ratio of 88:70. Then the mixed material was placed into a high temperature box furnace fed with nitrogen for a secondary heat treatment at 980°C, kept temperature for 2 h, and then crushed and sieved through a 500-meash sieve, to obtain an anode material.

The anode material prepared by this Example includes an aggregate and a carbon layer coated on surface of the aggregate. The aggregate includes nano-Ge powder and a carbon material in a mass ratio of 70.8:29.2.
The anode material has a median particle size of 14.5 $\mu$m and a specific surface area of 4.9 m$^2$/g, and an average thickness of the carbon layer of 310 nm.
The anode material has a target region ratio C of 65% tested by the test method of the target region ratio C described above.
The anode material has a porosity of 2.8% tested by a mercury intrusion method on anode material particle.
The anode material has a pressure-resistant hardness of 89 MPa in average tested by a nanoindentation on anode material particle.

**Example 7**

The preparation method of anode material of this Example included following:

(1) Sn powder with a median particle size of 80 nm, cetyl trimethyl ammonium bromide, and phenolic resin were added to ethanol solution in a mass ratio of 66:4.5: 15.5, followed by performing a ultrasonic dispersion for 90 minutes to obtain a dispersion solution. Then the dispersion solution was placed in a ball mill for grinding dispersion for 5 h to obtain a first precursor solution, followed by performing a spray drying treatment to obtain a first precursor;
(2) the first precursor was placed in a heat treatment furnace fed with nitrogen, heated to 890°C for a primary heat treatment, and kept temperature for 2 h to obtain a second precursor;
(3) the second precursor was placed in a fusion machine with a rotating speed of 640 r/min and a blade gap width of 0.8 cm for mechanical fusion for 4 h, to obtain an aggregate; and
(4) the aggregate was mixed with asphalt in a mass ratio of 100:75. Then the mixed material was placed into a high temperature box furnace fed with nitrogen for a secondary heat treatment at 920°C, kept temperature for 2 h, and then crushed and sieved through a 500-meash sieve, to obtain an anode material.

The anode material prepared by this Example includes an aggregate and a carbon layer coated on surface of the aggregate. The aggregate includes nano Sn powder and a carbon material in a mass ratio of 63.5:36.5.
The anode material has a median particle size of 11.5 $\mu$m and a specific surface area of 3.1 m$^2$/g, and an average thickness of the carbon layer of 350 nm.
The anode material has a target region ratio C of 75% tested by the test method of the target region ratio C described above.
The anode material has a porosity of 1.4% tested by a mercury intrusion method on anode material particle.
The anode material has a pressure-resistant hardness of 117 MPa in average tested by a nanoindentation on anode material particle.

**Example 8**

Example 8 was basically the same as Example 1, except that:
(1) silicon powder with a median particle size of 100nm was dispersed in ethylene glycol solution, alkylphenol polyoxyethylene ether and phenolic resin were dispersed in ethylene glycol solution, and the above solutions were mixed under stirring, followed by performing a ultrasonic dispersion for 10 min, to obtain a dispersion solution. Then the dispersion solution was placed in a ball mill for grinding dispersion for 6 h to obtain a first precursor solution, followed by performing a freeze drying treatment to obtain a first precursor; and
The temperature of the primary heat treatment in step (2) was 1200°C.
The anode material prepared by this Example includes an aggregate and a carbon layer coated on surface of the aggregate. The aggregate includes nano-silicon powder and a carbon material in a mass ratio of 64.6:35.4.
The anode material has a median particle size of 14.8 $\mu$m and a specific surface area of 3.7 m$^2$/g, and an average thickness of the carbon layer of 400 nm.
The anode material has a target region ratio C of 78% tested by the test method of the target region ratio C described above.
The anode material has a porosity of 2.6% tested by a mercury intrusion method on anode material particle.
The anode material has a pressure-resistant hardness of 167 MPa in average tested by a nanoindentation on anode material particle.

**Example 9**

Example 9 was basically the same as Example 1, except that: the temperature of the secondary heat treatment in step (4) was 600°C.
The anode material prepared by this Example includes an aggregate and a carbon layer coated on surface of the aggregate. The aggregate includes silicon powder and a carbon material in a mass ratio of 64.6:35.8.
The anode material has a median particle size of 13.8 $\mu$m and a specific surface area of 3.1 m$^2$/g, and an average thickness of the carbon layer of 420 nm.
The anode material has a target region ratio C of 40% tested by the test method of the target region ratio C described above.
The anode material has a porosity of 3.5% tested by a mercury intrusion method on anode material particle.
The anode material has a pressure-resistant hardness of 133 MPa in average tested by a nanoindentation on anode material particle.

**Example 10**

Example 10 was basically the same as Example 1, except that: the secondary heat treatment of step (4) was omitted.

The anode material prepared by this Example includes an aggregate. The aggregate includes silicon powder and a carbon material in a mass ratio of 64.1:32.8.

The anode material has a median particle size of 14.5 $\mu$m and a specific surface area of 3.8 m$^2$/g, and an average thickness of the carbon layer of 380 nm.

The anode material has a target region ratio C of 26% tested by the test method of the target region ratio C described above.

The anode material has a porosity of 6.7% tested by a mercury intrusion method on anode material particle.

The anode material has a pressure-resistant hardness of 59 MPa in average tested by a nanoindentation on anode material particle.

**Example 11**

The anode material was prepared by a method basically same as Example 1, except that: in step (1), the additive (alkylphenol polyoxyethylene ether) was not added.

The anode material prepared by this Example includes an aggregate and a carbon layer coated on surface of the aggregate. The aggregate includes nano-silicon powder and a carbon material in a mass ratio of 64.8:35.2.

The anode material has a median particle size of 13.8 $\mu$m and a specific surface area of 3.9 m$^2$/g, and an average thickness of the carbon layer of 360 nm.

The anode material has a target region ratio C of 16% tested by the test method of the target region ratio C described above.

The anode material has a porosity of 9.6% tested by a mercury intrusion method on anode material particle.

The anode material has a pressure-resistant hardness of 95 MPa in average tested by a nanoindentation on anode material particle.

**Example 12**

The anode material was prepared by a method basically same as Example 1, except that: in step (1), a metal oxide (SiO) was further added, a mass ratio of SiO and the silicon powder was 5:100.

The anode material prepared by this Example includes an aggregate and a carbon layer coated on surface of the aggregate. The aggregate includes nano-silicon powder and a carbon material. A mass ratio of the silicon powder, the SiO and the carbon material is 63.8:4.5:31.7.

The anode material has a median particle size of 11.8 $\mu$m and a specific surface area of 3.5 m$^2$/g, and an average thickness of the carbon layer of 320 nm.

The anode material has a target region ratio C of 18% tested by the test method of the target region ratio C described above.

The anode material has a porosity of 2.5% tested by a mercury intrusion method on anode material particle.

The anode material has a pressure-resistant hardness of 195 MPa in average tested by a nanoindentation on anode material particle.

**Example 13**

The anode material was prepared by a method basically same as Example 1, except that: in step (1), a conductivity enhancer (single-wall carbon nanotube) with a tensile strength of 59 GPa was further added, a mass ratio of the single-wall carbon nanotube and the silicon powder is 1.5:100.

The anode material prepared by this Example includes an aggregate and a carbon layer coated on surface of the aggregate. The aggregate includes nano-silicon powder and a carbon material. A mass ratio of the silicon powder, the single-wall carbon nanotube, and the carbon material is 64.8:1.1:34.1.

The anode material has a median particle size of 10.4 $\mu$m and a specific surface area of 2.1 m$^2$/g, and an average thickness of the carbon layer of 360 nm.

The anode material has a target region ratio C of 18.8% tested by the test method of the target region ratio C described above.

The anode material has a porosity of 2.9% tested by a mercury intrusion method on anode material particle.

The anode material has a pressure-resistant hardness of 175 MPa in average tested by a nanoindentation on anode material particle.

**Comparative Example 1**

The anode material was prepared by a method basically same as Example 1, except that: in step (1), the grinding dispersion was omitted.

The anode material prepared by this Comparative Example includes an aggregate and a carbon layer coated on surface of the aggregate. The aggregate includes nano-silicon powder and a carbon material in a mass ratio of 60.8:38.2.

The anode material has a median particle size of 10.4 $\mu$m and a specific surface area of 4.6 m$^2$/g, and an average thickness of the carbon layer of 320 nm.

The anode material has a target region ratio C of 2% tested by the test method of the target region ratio C described above.

The anode material has a porosity of 6.8% tested by a mercury intrusion method on anode material particle.

The anode material has a pressure-resistant hardness of 48 MPa in average tested by a nanoindentation on anode material particle.

**Comparative Example 2**

The anode material was prepared by a method basically same as Example 1, except that: in step (3), the fusion treatment was omitted.

The anode material prepared by this Example includes an aggregate and a carbon layer coated on surface of the aggregate. The aggregate includes nano-silicon powder and a carbon material in a mass ratio of 76.2:35.2.

The anode material has a median particle size of 21.6 $\mu$m and a specific surface area of 6.9 m$^2$/g, and the carbon layer has an average thickness of 680 nm.

The anode material has a target region ratio C of 6% tested by the test method of the target region ratio C described above.

The anode material has a porosity of 13.9% tested by a mercury intrusion method on anode material particle.

The anode material has a pressure-resistant hardness of 44 MPa in average tested by a nanoindentation on anode material particle.

Test Methods

(1) Button battery testing

Electrochemical cycle performance was tested as following: dissolving the silicon carbon composite anode material, a conductive agent, and a binders in a mass percent of 94:1:5 in a solvent for mixing, controlling solid content to be 50%, then applying to a copper foil current collector, vacuum drying, to prepare an anode pole piece; and then assembling a 18650 cylindrical single cell by conventional production process by further using a ternary cathode pole piece prepared by a conventional production process, 1mol/L of electrolyte including LiPF$_6$/ethylene carbonate + dimethyl carbonate + methyl ethyl carbonate (v/v=1:1:1), Celgard 2400 separator, and shell. The lithium ion battery was measured the initial thickness H0 of the pole piece using a micrometer. The charging and discharging testing of the lithium ion battery was performed by a LAND cell test system produced by Wuhan Jinnuo Electronics Co., Ltd, under room temperature conditions, charging and discharging at 0.2C constant current, and the charging and discharging voltage was controlled to 2.75 V to 4.2 V, thus obtaining the initial reversible capacity, the initial charging capacity and the initial discharging capacity. The initial Coulombic efficiency = the initial discharging capacity / the initial charging capacity.

After the cycling was repeated for 50 times , a thickness H1 of the pole piece of the lithium ion battery was measured by a micrometer, thus the expansion rate after 50 cycles = (H1-H0)/H0×100%.

After the cycling was repeated for 100 times, the discharging capacity was recorded as the remaining capacity of the lithium ion battery, thus the capacity retention ratio = the remaining capacity / the initial capacity×100%.

(2) Test for porosity of aggregate

The porosity was tested by a mercury intrusion method for at least three times, and an arithmetic average of the values of the at least three times was adopted as test result.

(3) Test for median particle size:

The median particle diameter in the present application has a physical meaning of the particle size when the cumulative particle size distribution percentage of the particles reaches 50%, which is tested by a Malvern particle size meter. The Malvern particle size meter uses the scattering phenomenon of the particles to light, to comprehensively calculate the particle size distribution of the particles under test according to the distribution of the scattered light energy.

(4) Test for pressure-resistant hardness of aggregate:

The pressure-resistant hardness was tested by a nanoindentation with a load of 0.6 N and an indentation depth of 0.5 $\mu$m.

(5) Test density of anode material:

A empty bottle was weighed as mass m, which was filled with distilled water, and weighed at this time as mass m1; then the bottle was washed, dried, added a certain amount of anode material, and recorded the total mass at this time as m2, then added distilled water for full filled, the mass was weighed as m3. The volume of the bottle v1 = (m1-m)/$\rho$1, the volume of the anode material v2 = (m2-m3)/$\rho$1, test density of the anode material $\rho$2= (m3-m)/(V-V1), where $\rho$1 was the density of distilled water.

(6) Test for specific surface area:

The specific surface area of anode material was tested by a Micromeritics specific surface area analyzer.

(7) Test for tensile strength:

The tensile strength of the conductive enhancer was tested by a tensile tester.
The results of the above performance test are as follows:

Table 1. Table of performance comparison results

| Sample | Target Region Ratio C (%) | Porosity (%) | ($\rho$1-$\rho$2)/$\rho$2 (%) | Initial Reversible Capacity (mAh/g) | Initial Coulombic Efficiency (%) | Capacity Retention Ratio after 100 Cycles (%) | Expansion Rate of pole piece after 50 cycles (%) |
|---|---|---|---|---|---|---|---|
| Example 1 | 16 | 2.0 | 1.1 | 1850 | 87.1 | 92.5 | 38.1 |
| Example2 | 35 | 1.6 | 0.8 | 1758 | 86.8 | 92.6 | 34.5 |
| Example3 | 45 | 2.3 | 1.2 | 1651 | 87.2 | 93.1 | 34.5 |
| Example4 | 52 | 3.1 | 1.5 | 1451 | 87.4 | 93.8 | 35.9 |
| Example5 | 38 | 2.4 | 1.2 | 1413 | 87.9 | 93.9 | 33.6 |
| Example6 | 65 | 2.8 | 1.4 | 1149 | 88.1 | 94.2 | 31.3 |
| Example7 | 75 | 1.4 | 0.7 | 866 | 85.9 | 92.1 | 33.3 |
| Example8 | 78 | 2.6 | 1.3 | 1712 | 85.0 | 92.7 | 38.9 |
| Example9 | 40 | 3.5 | 1.7 | 1801 | 86.4 | 91.9 | 38.5 |
| Example 10 | 26 | 9.8 | 5 | 1930 | 85.3 | 84.0 | 43.7 |
| Example11 | 15.3 | 3.8 | 1.9 | 1885 | 87.2 | 87.5 | 40.2 |
| Example12 | 18 | 2.5 | 1.2 | 1790 | 87.0 | 93.1 | 35.8 |

(continued)

| Sample | Target Region Ratio C (%) | Porosity (%) | $(\rho 1-\rho 2)/\rho 2$ ( % ) | Initial Reversible Capacity ( mAh/g ) | Initial Coulombic Efficiency (%) | Capacity Retention Ratio after 100 Cycles (%) | Expansion Rate of pole piece after 50 cycles (%) |
|---|---|---|---|---|---|---|---|
| Example13 | 18.8 | 2.9 | 1.4 | 1804 | 87.4 | 93.6 | 35.2 |
| Comparative Example 1 | 2 | 6.8 | 3.4 | 1801 | 86.9 | 82.9 | 48.2 |
| Comparative Example 2 | 6 | 13.9 | 7.5 | 1799 | 86.1 | 83.1 | 49.2 |

FIG. 4 is a graph of initial charging and discharging curve of the anode material prepared by Example 1 of the present application. As shown in FIG. 4, the anode material prepared by Example 1 has a high initial charging and discharging capacity and a high initial Coulombic efficiency, since an appropriate spacing of the active material in the anode material is maintained, which effectively avoids the self-agglomeration of the active material, avoids losing the electrical contact during lithium intercalation and de-intercalation, enhances the bonding of the active material and the carbon material, thus improving the electrochemical performance of the anode material.

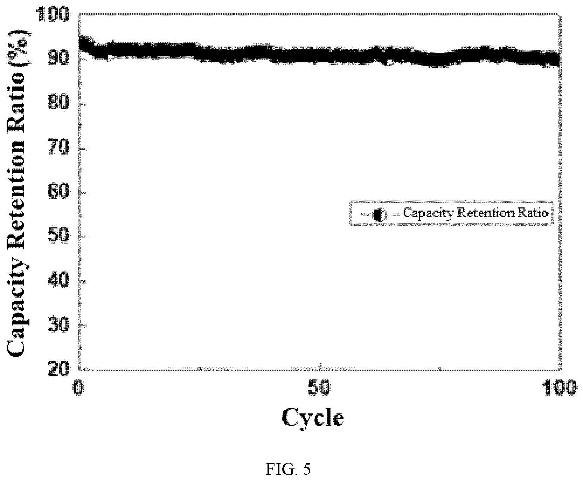

FIG. 5 is a graph of cycle performance curve of the anode material prepared by Example 1 of the present application. As shown in FIG. 5, the anode material has an excellent cycle performance, and its capacity retention rate after 100 cycles is 93.1%, since the aggregate has a small porosity, so that electrolyte is not easy to permeate into the aggregate. The structure of the aggregate facilitates to protect the active material particle therein, which can effectively inhibit volume expansion of the anode material, reduce expansion rate, and improve cycle performance of battery.

As shown in Table 1, the anode materials prepared by Examples 1 to 10 includes the aggregate, where the aggregate includes the active material and the carbon material. By controlling the spacing of the active material in the aggregate to ensure the dispersibility of the active material, agglomeration of the active material is avoided, and transport passage of charge carrier inside the aggregate is ensured to be smooth. It can avoid soft agglomeration of the particles. An appropriate spacing of the active material is maintained, which facilitates subsequent permeation of carbon material, enhances the bonding force between the active material and the carbon material, thus improving the electrochemical performance of the material. The aggregate has a small porosity, so that electrolyte is not easy to permeate into the aggregate. The structure of the aggregate facilitates to protect the active material particle therein, which can effectively inhibit volume expansion of the anode material, reduce expansion rate, and improve cycle performance of battery.

During the preparation process of the anode material of Example 8, due to an excessively high temperature of the primary heat treatment, a small amount of inactive SIC material was generated, thus the reversible capacity and the initial Coulombic efficiency of the anode material are both reduced.

During the preparation process of the anode material of Example 9, due to an excessively low temperature of the secondary heat treatment, the carbon source coated on surface of the aggregate was incompletely carbonized, thus the conductivity and the initial Coulombic efficiency of the anode material are both reduced.

During the preparation process of the anode material of Example 10, since surface of the aggregate was not carbon coated, no carbon layer was formed, thus the conductivity and the initial Coulombic efficiency of the anode material are both reduced.

During the preparation process of the anode material of Example 11, since it was not added an additive, the bonding between the active particle and the carbon material was not tight, thus the structure stability of the aggregate is reduced, which decreases buffering and inhibition effect on the expansion.

During the preparation process of the anode material of Example 12, in the process of grading mixing the active material, the additive, the first carbon source, and the solvent, a metal oxide was further added, thus the structure rigidity of the aggregate is improved, the cycle stability of the particle is improved, and the expansion rate of pole piece after cycling is reduced.

During the preparation process of the anode material of Example 13, in the process of grading mixing the active material, the additive, the first carbon source, and the solvent, a conductivity enhancer was further added, thus transport of charge carrier inside the aggregate can be effectively improved, the conductivity of the aggregate is enhanced, and the Initial Coulombic efficiency of the anode material is improved. Moreover, the conductivity enhancer can effectively improve structure stability of the aggregate, the cycle stability of the particle is improved, and the expansion rate of pole piece after cycling is reduced.

During the preparation process of the anode material of Comparative Example 1, the raw materials in step (1) were not performed a grinding dispersion, thus mixing uniformity of the active material and the carbon material is reduced, and the active material is not completely dispersed in raw materials. As a result, in the aggregate of the anode material, the spacing among the active materials is significantly reduced, the dispersibility of the active material is reduced, the active materials tend to agglomerate, the transport passage of charge carrier in the aggregate is easily blocked, and the electrochemical performance of the material is reduced.

During the preparation process of the anode material of Comparative Example 2, the precursor in the step (2) was not performed a fusion treatment, thus the overall structure tends to be loose, the connection stability between the active material and the carbon material is poor, and the pore between the active material and the carbon material is broadened. As a result, the structure strength of the aggregate is reduced, the pressure-resistant strength is reduced significantly, thus it is difficult to resist the stress change caused by the expansion effect of the active material, thereby increasing the expansion rate.

While the present application has been disclosed in terms of preferred embodiments above, but not for limitation of claims, it will be apparent to those skilled in the art that various changes and modifications can be made without departing from the concepts of the present application, and the scope of the present application shall be accorded the broadest scope as defined by the following claims.

**Claims**

1. An anode material, **characterized in that** the anode material comprises an aggregate, wherein the aggregate comprises an active material and a carbon material, and the anode material has a porosity of $\leq$10% and a target region ratio C $\geq$15%,
   wherein the target region ratio C is obtained by following test method:
   dividing a SEM section of an anode material particle into regions with an area of A×B, wherein A and B are both $\leq$1 μm, counting distribution of the active material within all of the regions of single the anode material particle, setting number of regions having the active material with a spacing to each other of 10 nm to 300 nm as N1, setting a total number of regions having the active material with a spacing to each other of less than 10 nm and the regions having the active material with a spacing to each other of greater than 300 nm as N2, and defining a target region ratio X of single the anode material particle as X=N1/N2, wherein C is an arithmetic average of X values of any five of the anode material particles.

2. The anode material according to claim 1, **characterized in that** the aggregate further comprises a metal oxide.

3. The anode material according to claim 1, **characterized in that** the aggregate further comprises a conductivity enhancer.

4. The anode material according to claim 2, **characterized in that** the anode material comprises at least one of following features (1) to (6):

   (1) the metal oxide is distributed among the active material, and the carbon material is filled between the active material and the metal oxide;
   (2) there are pores between the active material and the metal oxide, and the pores are filled with the carbon material;
   (3) the metal oxide has a chemical formula of $M_xO_y$, 0.2$\leq$y/x$\leq$3, wherein M comprises at least one of Sn, Ge, Si, Fe, Cu, Ti, Na, Mg, Al, Ca, and Zn;
   (4) the metal oxide is in a form of sheet and/or strip shape;
   (5) an aspect ratio of the metal oxide is greater than 2; and
   (6) a mass ratio of the metal oxide and the active material is (1-20): 100.

5. The anode material according to claim 3, **characterized in that** the anode material comprises at least one of following features (1) to (6):

   (1) the conductivity enhancer comprises at least one of an alloy material and conductive carbon;
   (2) the conductive carbon comprises at least one of carbon nanotube, carbon fiber, and graphite fiber;
   (3) a conductivity of the conductivity enhancer is >$10^2$ S/m;
   (4) the conductivity enhancer is in a form of sheet and/or strip shape, and the conductivity enhancer has an aspect ratio of 2 to 3000;
   (5) a mass ratio of the conductivity enhancer and the active material is (0.1-10): 100; and

(6) a tensile strength of the conductivity enhancer is ≥500 MPa.

6. The anode material according to any one of claims 1 to 5, **characterized in that** the anode material comprises at least one of following features (1) to (4):

(1) the active material comprises at least one of Li, Na, K, Sn, Ge, Si, $SiO_x$ (0<x<2), Fe, Mg, Ti, Zn, Al, P, and Cu;
(2) a median particle size of the active material is 1 nm to 500 nm;
(3) the carbon material comprises at least one of the amorphous carbon, crystalline carbon, and mesocarbon microbead; and
(4) a mass ratio of the active material and the carbon material is (20-70):(10-80).

7. The anode material according to any one of claims 1 to 6, **characterized in that** the anode material comprises at least one of following features (1) to (8):

(1) the anode material further comprises a carbon layer coated on at least part of surface of the aggregate;
(2) a material of the carbon layer comprises amorphous carbon;
(3) a thickness of the carbon layer is 10 nm to 1500 nm;
(4) a median particle size of the anode material is 0.5 $\mu$m to 30 $\mu$m;
(5) a specific surface area of the anode material is ≤10 $m^2$/g;
(6) a pressure-resistant hardness of the anode material is ≥50 MPa;
(7) a porosity of the anode material is ≤10%; and
(8) a density of the aggregate satisfies following relationship: a difference between a test density of the aggregate and an average density of the aggregate is ≤5%.

8. A preparation method of an anode material, comprising following:

mixing raw materials containing an active material, a first carbon source, and a solvent and fully dispersing, and removing the solvent to obtain a first precursor;
performing a primary heat treatment on the first precursor at 600°C to 1200°C to obtain a second precursor; and
performing a densification treatment on the second precursor to obtain an aggregate.

9. The preparation method according to claim 8, **characterized in that** the preparation method comprises at least one of following features (1) to (22):

(1) the active material comprises at least one of Li, Na, K, Sn, Ge, Si, $SiO_x$ (0<x<2), Fe, Mg, Ti, Zn, Al, P, and Cu;
(2) the first carbon source comprises at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt;
(3) a mass ratio of the first carbon source and the active material is (5-40): 100;
(4) the solvent comprises an organic solvent;
(5) the organic solvent comprises at least one of methanol, ethanol, ethylene glycol, propanol, isopropanol, glycerol, n-butanol, isobutanol, and pentanol;
(6) an additive is further added in the process of mixing raw materials containing an active material, a first carbon source, and a solvent and fully dispersing;
(7) an additive is further added in the process of mixing raw materials containing an active material, a first carbon source, and a solvent and fully dispersing, wherein the additive comprises at least one of a surfactant and a coupling agent;
(8) an additive is further added in the process of mixing raw materials containing an active material, a first carbon source, and a solvent and fully dispersing, wherein the additive comprises a surfactant, and the surfactant comprises at least one of n-octadecanoic acid, lauric acid, polyacrylic acid, sodium dodecyl benzene sulfonate, n-eicosanoic acid, palmitic acid, tetradecanoic acid, undecanoic acid, cetyl trimethyl ammonium bromide, and polyvinyl pyrrolidone;
(9) an additive is further added in the process of mixing raw materials containing an active material, a first carbon source, and a solvent and fully dispersing, wherein the additive comprises a coupling agent, the coupling agent comprises a silane coupling agent, and the silane coupling agent comprises at least one of γ-aminopropyl triethoxy silane, γ-glycidoxypropyl trimethoxy silane, and γ-methacryloxypropyl trimethoxy silane;
(10) an additive is further added in the process of mixing raw materials containing an active material, a first carbon source, and a solvent and fully dispersing, wherein a mass ratio of the active material and the additive is (15-120):(1-10);

(11) a metal oxide is further added in the process of mixing raw materials containing an active material, a first carbon source, and a solvent and fully dispersing;

(12) a metal oxide is further added in the process of mixing raw materials containing an active material, a first carbon source, and a solvent and fully dispersing, wherein the metal oxide has a chemical formula of $M_xO_y$, $0.2 \leq y/x \leq 3$, wherein M comprises at least one of Sn, Ge, Si, Fe, Cu, Ti, Na, Mg, Al, Ca, and Zn;

(13) a metal oxide is further added in the process of mixing raw materials containing an active material, a first carbon source, and a solvent and fully dispersing, wherein the metal oxide is in a form of sheet and/or strip shape ;

(14) a metal oxide is further added in the process of mixing raw materials containing an active material, a first carbon source, and a solvent and fully dispersing, wherein an aspect ratio of the metal oxide is greater than 2;

(15) a metal oxide is further added in the process of mixing raw materials containing an active material, a first carbon source, and a solvent and fully dispersing, wherein a mass ratio of the metal oxide and the active material is (1-20):100;

(16) a conductivity enhancer is further added in the process of mixing raw materials containing an active material, a first carbon source, and a solvent and fully dispersing;

(17) a conductivity enhancer is further added in the process of mixing raw materials containing an active material, a first carbon source, and a solvent and fully dispersing, wherein a mass ratio of the conductivity enhancer and the active material is (0.1-10):100;

(18) a conductivity enhancer is further added in the process of mixing raw materials containing an active material, a first carbon source, and a solvent and fully dispersing, wherein the conductivity enhancer comprises at least one of an alloy material and a conductive carbon ;

(19) a conductivity enhancer is further added in the process of mixing raw materials containing an active material, a first carbon source, and a solvent and fully dispersing, wherein the conductive carbon comprises at least one of carbon nanotube, carbon fiber, and graphite fiber;

(20) a conductivity enhancer is further added in the process of mixing raw materials containing an active material, a first carbon source, and a solvent and fully dispersing, wherein a conductivity of the conductivity enhancer is $>10^2$ S/m;

(21) a conductivity enhancer is further added in the process of mixing raw materials containing an active material, a first carbon source, and a solvent and fully dispersing, wherein the conductivity enhancer is in a form of sheet and/or strip shape; and

(22) a conductivity enhancer is further added in the process of mixing raw materials containing an active material, a first carbon source, and a solvent and fully dispersing, wherein an aspect ratio of the conductivity enhancer is 2 to 3000.

10. The preparation method according to claim 8 or 9, **characterized in that** the preparation method comprises at least one of following features (1) to (5):

(1) a treatment manner of fully dispersing comprises at least one of mechanical stirring, ultrasonic dispersion, and grinding dispersion;

(2) the mixing raw materials containing an active material, a first carbon source, and a solvent is performed in a manner of grading mixing;

(3) the mixing raw materials containing an active material, a first carbon source, and a solvent is specifically performed as following: mixing the active material with the solvent to form a first premix, and mixing the first carbon source with the solvent to form a second premix, and mixing the first premix with the second premix;

(4) the process of preparing the first precursor comprises: mixing raw materials containing an active material, a first carbon source, and a solvent and fully dispersing, and performing a drying treatment to obtain the first precursor;

(5) the process of preparing the first precursor comprises: mixing raw materials containing an active material, a first carbon source, and a solvent and fully dispersing, and performing a drying treatment to obtain the first precursor, wherein a temperature of the drying treatment is 40°C to 600°C, and a time of the drying treatment is 1 h to 15 h.

11. The preparation method according to any one of claims 8 to 10, **characterized in that** the preparation method comprises at least one of following features (1) to (8):

(1) the densification treatment comprises at least one of a fusion process, a blending process, a moulding process, an isostatic pressing process, and an impregnation process;

(2) the densification treatment comprises fusion process, wherein the fusion process is mechanical fusion;

(3) the densification treatment comprises fusion process, wherein the fusion process is mechanical fusion, and a rotating speed of fusion machine used for the mechanical fusion is 300 r/min to 3000 r/min;
(4) the densification treatment comprises fusion process, wherein the fusion process is mechanical fusion, and a blade gap width of fusion machine used for the mechanical fusion is 0.01 cm to 0.9 cm;
(5) the densification treatment comprises fusion process, wherein the fusion process is mechanical fusion, and a time of the mechanical fusion is at least 0.5 h;
(6) a time of the primary heat treatment is 1 h to 10 h;
(7) a protective gas is fed during the primary heat treatment; and
(8) a protective gas is fed during the primary heat treatment, wherein the protective gas comprises at least one of nitrogen, helium, neon, argon, and krypton.

12. The preparation method according to any one of claims 8 to 11, **characterized in that** the preparation method comprises at least one of following features (1) to (3):

(1) the preparation method further comprises performing a carbon coating treatment on the aggregate;
(2) the preparation method further comprises performing a carbon coating treatment on the aggregate, wherein the carbon coating treatment comprises mixing the second precursor with a second carbon source for a secondary heat treatment; and
(3) the preparation method further comprises performing a carbon coating treatment on the aggregate, wherein the carbon coating treatment comprises mixing the aggregate with a second carbon source for a secondary heat treatment.

13. The preparation method according to claim 12, **characterized in that** the preparation method further comprises at least one of following features (1) to (6):

(1) a mass ratio of the second precursor and the second carbon source is (30-100):(10-70);
(2) the second carbon source comprises at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt;
(3) a mass ratio of the aggregate and the second carbon source is (20-100):(10-120);
(4) a temperature of the secondary heat treatment is 600°C to 1200°C, a time of the secondary heat treatment is 1 h to 10 h;
(5) a protective gas is fed during the secondary heat treatment; and
(6) a protective gas is fed during the secondary heat treatment, wherein the protective gas comprises at least one of nitrogen, helium, neon, argon, and krypton.

14. A lithium ion battery, **characterized in that** the lithium ion battery comprises the anode material according to any one of claims 1 to 7, or an anode material prepared by the preparation method according to any one of claims 8 to 13.

mixing raw materials containing an active material, a first carbon source, and a solvent and fully dispersing, and removing the solvent to obtain a first precursor ⟶ S10

performing a primary heat treatment on the first precursor at 600°C to 1200°C to obtain a second precursor ⟶ S20

performing a densification treatment on the second precursor to obtain an aggregate ⟶ S30

FIG. 1

S4800 3.0kV 8.1mm x1.00k SE(M)       50.0um

FIG. 2

FIG. 3

FIG. 4

FIG. 5

## INTERNATIONAL SEARCH REPORT

| International application No. |
| --- |
| **PCT/CN2022/110770** |

| A. | CLASSIFICATION OF SUBJECT MATTER |
| --- | --- |
| | H01M 4/36(2006.01)i; H01M 4/583(2010.01)i; H01M 10/0525(2010.01)i; H01M 4/38(2006.01)i |

According to International Patent Classification (IPC) or to both national classification and IPC

| B. | FIELDS SEARCHED |
| --- | --- |

Minimum documentation searched (classification system followed by classification symbols)

    H01M

Documentation searched other than minimum documentation to the extent that such documents are included in the fields searched

Electronic data base consulted during the international search (name of data base and, where practicable, search terms used)

    CNTXT; CNABS; WPABS; DWPI; WOTXT; USTXT; EPTXT; CNKI: 电池, 负极, 阳极, 孔隙率, 空隙率, 致密, 密实, 融合, 二次颗粒, 次级颗粒, 团聚, 凝聚, 分散, 弥散, 间距, 距离, lithium, battery, anode, porosity, compact+, dense, secondary particle, space, interval, agglomeration, gather, unite

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 113422029 A (BTR NEW MATERIAL GROUP CO., LTD. et al.) 21 September 2021 (2021-09-21)<br>    description, paragraphs [0004]-[0269] | 1-14 |
| X | CN 109273713 A (GUANGDONG DONGDAO NEW ENERGY CO., LTD.) 25 January 2019 (2019-01-25)<br>    description, paragraphs [0004]-[0066] | 8-14 |
| Y | CN 110885083 A (SAMSUNG SDI CO., LTD.) 17 March 2020 (2020-03-17)<br>    description, paragraphs [0005]-[0128] | 1-14 |
| Y | CN 109786706 A (ENN GRAPHENE TECHNOLOGY CO., LTD.) 21 May 2019 (2019-05-21)<br>    description, paragraphs [0004]-[0149] | 1-14 |
| Y | CN 110718685 A (AMPRIUS NANJING CO., LTD.) 21 January 2020 (2020-01-21)<br>    description, paragraphs [0004]-[0132] | 1-14 |
| Y | CN 101118964 A (SHENZHEN BTR NEW ENERGY MATERIALS CO., LTD.) 06 February 2008 (2008-02-06)<br>    description, p. 2, line 2 to p. 3, line 7 | 1-14 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **20 September 2022** | **28 September 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/110770** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 111204756 A (SHENZHEN XFH TECHNOLOGY CO., LTD.) 29 May 2020 (2020-05-29)<br>        entire document | 1-14 |

Form PCT/ISA/210 (second sheet) (January 2015)

# EP 4 207 375 A1

**INTERNATIONAL SEARCH REPORT**
Information on patent family members

| International application No. |
| --- |
| **PCT/CN2022/110770** |

| Patent document cited in search report | | | Publication date (day/month/year) | Patent family member(s) | | | Publication date (day/month/year) |
| --- | --- | --- | --- | --- | --- | --- | --- |
| CN | 113422029 | A | 21 September 2021 | None | | | |
| CN | 109273713 | A | 25 January 2019 | None | | | |
| CN | 110885083 | A | 17 March 2020 | JP | 2020043069 | A | 19 March 2020 |
| | | | | EP | 3621132 | A1 | 11 March 2020 |
| | | | | US | 2020083536 | A1 | 12 March 2020 |
| | | | | KR | 20200028637 | A | 17 March 2020 |
| | | | | JP | 2021193673 | A | 23 December 2021 |
| | | | | KR | 102323423 | B1 | 05 November 2021 |
| | | | | US | 11276859 | B2 | 15 March 2022 |
| | | | | JP | 7094253 | B2 | 01 July 2022 |
| CN | 109786706 | A | 21 May 2019 | None | | | |
| CN | 110718685 | A | 21 January 2020 | KR | 20210153710 | A | 17 December 2021 |
| | | | | WO | 2021077586 | A1 | 29 April 2021 |
| | | | | JP | 2022534241 | A | 28 July 2022 |
| | | | | EP | 3955345 | A1 | 16 February 2022 |
| | | | | US | 2022246924 | A1 | 04 August 2022 |
| CN | 101118964 | A | 06 February 2008 | CN | 100524906 | C | 05 August 2009 |
| CN | 111204756 | A | 29 May 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2021110323875